# EUROPEAN PATENT APPLICATION

(11) **EP 4 683 081 A1**
(43) Date of publication of application: **21.01.2026**
(21) Application number: 24769632.1
(22) Date of filing: 09.01.2024
(51) Int. Cl.: H01M 50/342

(54) **METHOD FOR MOUNTING EXPLOSION-PROOF SHEET**

(30) Priority: 15.03.2023 CN 202310246166
(71) Applicant: Jiangsu RDF Precision Technology Co., Ltd., Changzhou, Jiangsu 213200 (CN)
(72) Inventor: WANG, Yousheng, hangzhou, Jiangsu 213200 (CN)
(74) Representative: Zoli, Filippo
(86) International application number: PCT/CN2024/071303
(87) International publication number: WO 2024/187936

(57) **Abstract**

The present application relates to the technical field of explosion-proof sheets, and particularly, to a method for mounting an explosion-proof sheet. The method comprises the following steps: 1) providing an explosion-proof sheet and a fixing ring that defines an enclosed area; connecting the explosion-proof sheet to the fixing ring to seal the enclosed area; and 2) providing a battery housing having an accommodating cavity therein for disposing a battery cell, wherein the top of the accommodating cavity of the battery housing is provided with a top opening for mounting a top cover sheet; the battery housing is provided with a mounting wall arranged in misalignment with the top opening; the mounting wall is provided with a blast hole in communication with the accommodating cavity; the fixing ring is mounted on the mounting wall, and the explosion-proof sheet seals the blast hole. According to the present application, the explosion-proof sheet is first connected to the fixing ring, and then the fixing ring is mounted in the blast hole of the mounting wall of the battery housing. The mounting wall is in misalignment with the top opening of the battery housing and is not mounted on the top cover sheet, which reduces the welding procedures on the top cover sheet and reduces the impact on the performance of the explosion-proof sheet during the welding of lower plastic pieces.

## Description

### CROSS-REFERENCE TO RELATED APPLICATION

This application is filed on the basis of Chinese patent application No. CN202310246166.0, entitled "METHOD FOR MOUNTING EXPLOSION-PROOF SHEET", filed March 15, 2023, and claims priority to the Chinese patent application, the entire contents of which are incorporated herein by reference.

### TECHNICAL FIELD

The present disclosure relates to the technical field of explosion-proof sheets, and specifically to a method for mounting an explosion-proof sheet.

### BACKGROUND

At present, with the continuous development of power battery and energy storage technology, batteries have been widely used because of their high capacity and other excellent performance. A battery includes a housing, a top cover, battery cells, and the like. The battery cells are electricity storage elements of the battery and are arranged inside the housing. An upper end of the housing is provided with an upper end opening. The top cover closes the upper end opening of the housing. Terminals are provided on the top cover. The battery is electrically connected to the outside through the terminals.

When the battery is in use, the pressure in the housing may increase due to various factors. If the pressure in the housing continues to increase, the pressure in the battery will be too high, resulting in a battery explosion accident, which damages the electronic product or even injures the user.

To prevent the battery from exploding, an explosion hole is generally provided in the top cover of the battery, and an explosion-proof sheet is provided in the explosion hole. When the pressure in the battery exceeds a set value, the explosion-proof sheet will break to release abnormal gas inside the battery, thereby reducing the pressure in the battery and preventing the battery from exploding due to excessive internal pressure.

### SUMMARY

### Technical Problem

In the existing technology, the explosion-proof sheet is mounted in the explosion hole of the top cover, when the lower plastic member is mounted at the bottom of the top cover, ultrasonic welding is required, which will affect the explosion-proof sheet. In addition, because the explosion-proof sheet is mounted on the top cover, the exhaust path is long and the exhaust efficiency is low after the explosion-proof sheet breaks.

### Technical Scheme

An objective of the present disclosure is to provide a method for mounting an explosion-proof sheet, to solve the problem in case that the explosion-proof sheet is mounted on the top cover in the existing technology.

The present disclosure provides a method for mounting an explosion-proof sheet, which includes:
step 1): providing an explosion-proof sheet and a retaining ring, wherein an enclosed area is defined by the retaining ring; connecting the explosion-proof sheet to the retaining ring, so that the explosion-proof sheet closes the enclosed area; and
step 2): providing a battery housing, wherein an accommodating cavity for accommodating battery cells is provided in the battery housing, a top opening for mounting a top cover is formed at a top of the battery housing, the battery housing includes a mounting wall arranged offset from the top opening, and the mounting wall is provided with an explosion hole in communication with the accommodating cavity; and mounting the retaining ring on the mounting wall, so that the explosion-proof sheet closes the explosion hole.

Further, in the step 2), after the retaining ring is mounted on the mounting wall, the explosion-proof sheet is exposed to outside of the mounting wall.

Further, in the step 1), the explosion-proof sheet is fixed to the retaining ring by welding, and in the step 2), the retaining ring is fixed to the mounting wall by welding.

Further, the retaining ring includes an annular inner side portion located on an inner side of the mounting wall, the inner side portion is recessed outward to form a mounting step having an opening facing outward, the mounting step is arranged surrounding the enclosed area, a mounting ring is provided on an outer periphery of the explosion-proof sheet, and in the step 1), the mounting ring is mounted on the mounting step.

Further, a bottom of the mounting step has a flat surface, an outer periphery of the mounting step has an outer peripheral surface, and in the step 1), after the mounting ring is placed on the mounting step, the mounting ring abuts against the flat surface, and an outer periphery of the mounting ring abuts against the outer peripheral surface.

Further, an outer side of the retaining ring includes an annular outer side portion, an outer peripheral side wall of the outer side portion, and an inner side wall of the outer side portion, and an inner side wall of the explosion hole are respectively arranged longitudinally; and in the step 2), the outer side portion is inserted into the explosion hole, and an outer periphery of the outer side portion abuts against the inner side wall of the explosion hole.

Further, an outer side of the retaining ring includes an annular outer side portion, and an outer peripheral side wall of the outer side portion and an inner side wall of the explosion hole are respectively arranged longitudinally; an inner side wall of the outer side portion is inclined toward the enclosed area in an extending direction from the inner side portion to the outer side portion; and
in the step 2), the outer side portion is inserted into the explosion hole, and an outer periphery of the outer side portion abuts against the inner side wall of the explosion hole.

Further, an outer side of the retaining ring includes an annular outer side portion, an outer peripheral side wall of the outer side portion, and an inner side wall of the outer side portion, and an inner side wall of the explosion hole are respectively inclined toward the enclosed area in an extending direction from the inner side portion to the outer side portion; and
in the step 2), the outer side portion is inserted into the explosion hole, and an outer periphery of the outer side portion abuts against the inner side wall of the explosion hole.

Further, the explosion-proof sheet includes an explosion layer in a middle portion thereof, and the mounting ring is arranged surrounding and abutting against an outer periphery of the explosion layer; the explosion layer includes an inwardly curved piece in an arc shape and a movable piece, an outer periphery of the inwardly curved piece abuts against an inner side of the mounting ring, and a middle portion of the inwardly curved piece is curved and convex toward the accommodating cavity; the inwardly curved piece has an outer arc surface facing away from the accommodating cavity, and a plurality of elastic columns are arranged protruding from the outer arc surface;
the mounting ring includes an outer side wall arranged facing away from the mounting wall, an elastic rubber ring is arranged protruding from the outer side wall of the mounting ring, a bottom of the rubber ring is fixedly connected to the outer side wall of the mounting ring, and a movement area is defined by the rubber ring; a plurality of gas holes are provided in a middle portion of the rubber ring, and the plurality of gas holes are arranged at intervals in a circumferential direction of the rubber ring; the movable piece is embedded in a lower portion of the movement area, an outer periphery of the movable piece is fixed to an inner side wall of the rubber ring by an interference fit, and a top of the rubber ring extends toward the movement area to form a limiting ring to prevent the movable piece from moving upward out of the movement area; and
when pressure in the accommodating cavity is less than a set value, a top of each of the elastic columns abuts against a bottom of the movable piece, and the elastic columns are in a natural state; and when the pressure of the accommodating cavity exceeds the set value, the pressure in the accommodating cavity drives the inwardly curved piece to bend and deform outward, the elastic columns are moved upward and compressed, the elastic columns drive the movable piece to move to an upper portion of the movement area, and when the inwardly curved piece breaks, the plurality of gas holes enter into communication with the accommodating cavity, and gas in the accommodating cavity passes through the broken explosion-proof sheet and is released to outside of the accommodating cavity through the plurality of gas holes.

Further, each of the elastic columns is provided with a hollow hole vertically running therethrough, a pressing column is arranged in the hollow hole, a top of the pressing column is arranged flush with the top of the respective elastic column, and a bottom of the pressing column is located above a bottom of the respective elastic column; a lower portion of each of the elastic columns includes a lower segment, the lower segment is located below the respective pressing column, the hollow hole includes a hollow segment located inside the lower segment, and the hollow segment is located below the pressing column;
a plurality of holes are provided in the lower segment, and the hollow segment is in communication with outside through the holes; the plurality of holes are arranged extending in an axial direction of the lower segment, and the plurality of hollow holes are arranged at intervals in a circumferential direction of the lower segment; the bottom of the pressing column extends downward to form a tapered head, and a gap exists between the tapered head and the inwardly curved piece; and
when the pressure in the accommodating cavity exceeds the set value, the pressure in the accommodating cavity drives the inwardly curved piece to bend and deform outward, the elastic columns are moved upward, the lower segments are compressed, and the tapered heads are pressed against the inwardly curved piece and puncture the inwardly curved piece.

### Beneficial effects

Compared with the existing technology, in the method for mounting an explosion-proof sheet according to the present disclosure, the explosion-proof sheet and the retaining ring are first connected together, and then the retaining ring is mounted in the explosion hole of the mounting wall of the battery housing. In addition, the mounting wall is offset from the top opening of the battery housing, and does not need to be mounted on the top cover, so that the welding process on the top cover is simplified, the impact of welding of the lower plastic member on the performance of the explosion-proof sheet is reduced, and the problem in case that the explosion-proof sheet is mounted on the top cover is solved.

### BRIEF DESCRIPTION OF DRAWINGS

FIG. 1 is a schematic three-dimensional diagram of a battery with an explosion-proof sheet according to the present disclosure;
FIG. 2 is a partial schematic sectional view showing cooperation between an explosion-proof sheet and a mounting wall according to the present disclosure;
FIG. 3 is a partial schematic sectional view showing cooperation between an explosion-proof sheet and a mounting wall according to the present disclosure;
FIG. 4 is a partial schematic sectional view showing cooperation between an explosion-proof sheet and a mounting wall according to the present disclosure;
FIG. 5 is a partial schematic sectional view showing cooperation between an explosion-proof sheet and a mounting wall according to the present disclosure;
FIG. 6 is a schematic front view of an inwardly curved piece in an inwardly bent state in an explosion-proof sheet according to the present disclosure;
FIG. 7 is a schematic front view of an explosion-proof sheet after an inwardly curved piece drives a movable piece to move upward according to the present disclosure;
FIG. 8 is a schematic front view showing cooperation between an elastic column and an inwardly curved piece under no compression according to the present disclosure; and
FIG. 9 is a schematic front view showing cooperation between an elastic column and an inwardly curved piece under compression according to the present disclosure.

### DETAILED DESCRIPTION

To make the objectives, technical schemes, and advantages of the present disclosure clearer, the present disclosure is described in further detail with reference to accompanying drawings and embodiments. It should be understood that the specific embodiments described herein are merely used for explaining the present disclosure, and are not intended to limit the present disclosure.

The implementation of the present disclosure will be described in detail below through specific embodiments.

The same or similar reference numerals in the drawings of the embodiments are used to denote the same or similar parts. In the description of the present disclosure, it should be understood that the orientation or positional relationships indicated by the terms such as "on," "below," "left," and "right" are based on orientation or position relationships shown in the accompanying drawings, and are used only for ease and brevity of illustration and description, rather than indicating or implying that the mentioned apparatus or element must have a particular orientation or must be constructed and operated in a particular orientation. Therefore, the terms describing positional relationships in the drawings are for illustration only, and should not be construed as limiting of the present disclosure. For those having ordinary skills in the art, the specific meanings of the above terms can be understood according to specific circumstances.

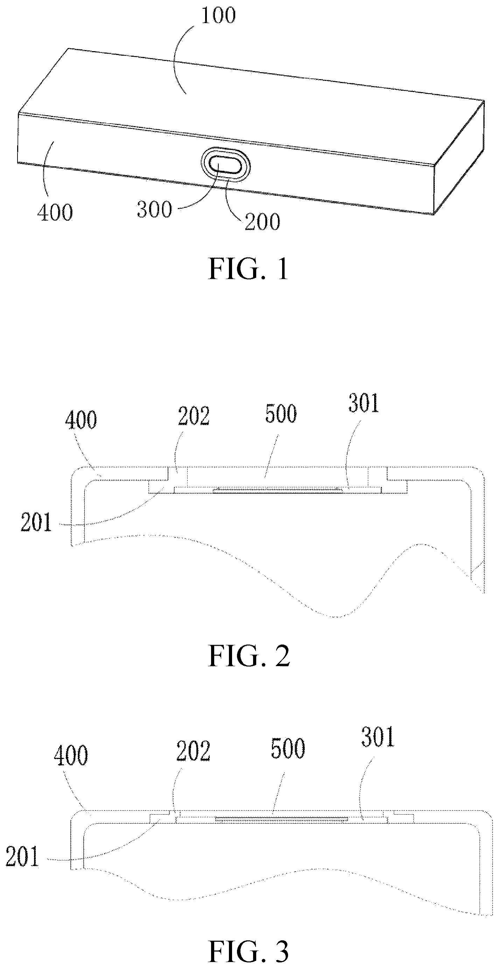

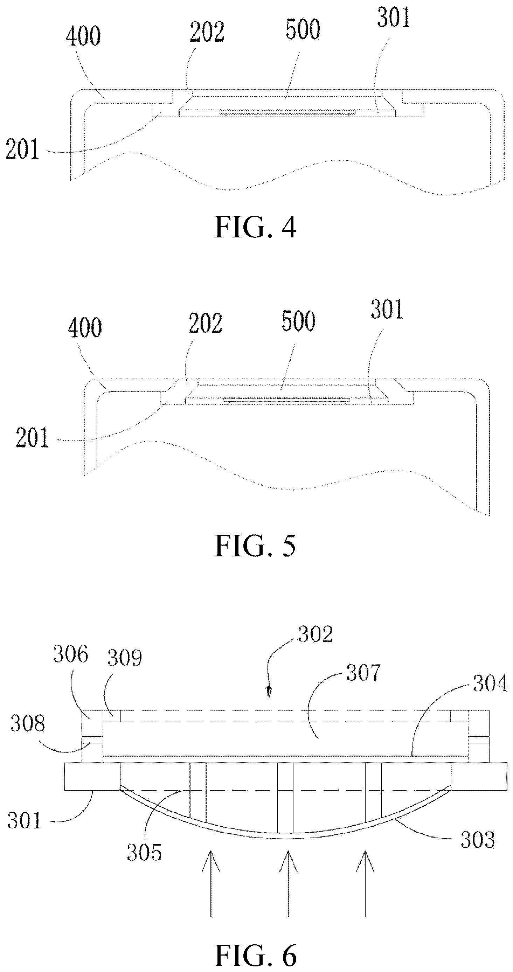

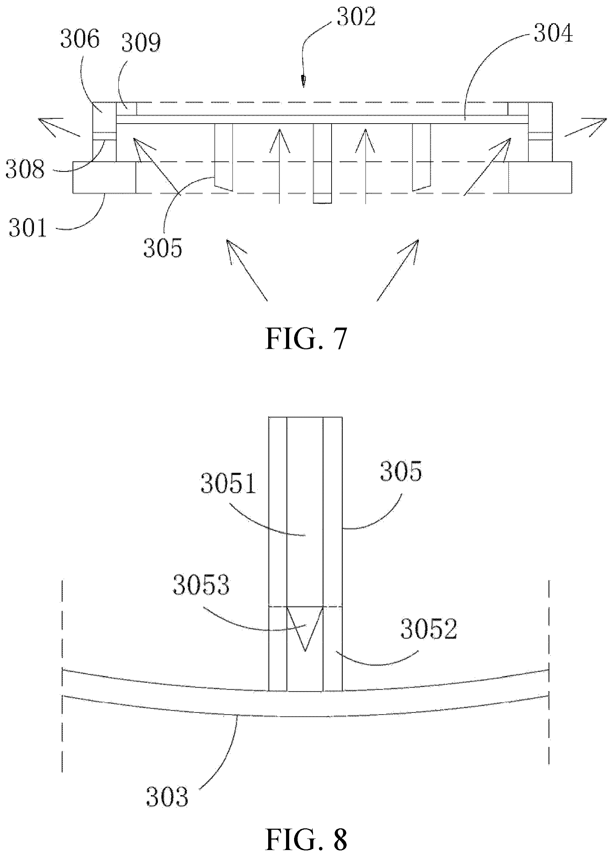

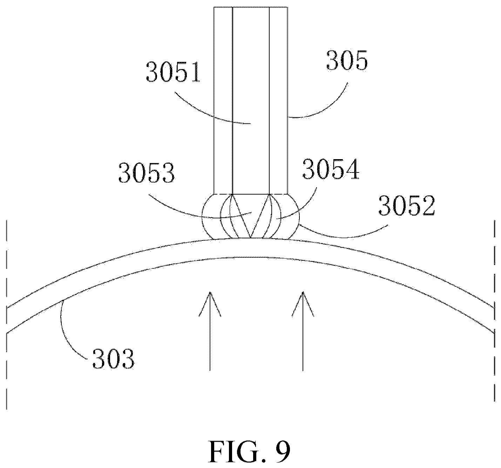

FIG. 1 to FIG. 9 show preferred embodiments of the present disclosure.

A method for mounting an explosion-proof sheet is provided, which includes the following steps 1) to 2).

At step 1), an explosion-proof sheet 300 and a retaining ring 200 are provided, wherein an enclosed area is defined by the retaining ring 200; and the explosion-proof sheet 300 is connected to the retaining ring 200, so that the explosion-proof sheet 300 closes the enclosed area.

At step 2), a battery housing 100 is provided. An accommodating cavity for accommodating battery cells is provided in the battery housing 100. A top opening for mounting a top cover is formed at a top of the battery housing 100. The battery housing 100 includes a mounting wall 400 arranged offset from the top opening. The mounting wall 400 is provided with an explosion hole 500 in communication with the accommodating cavity. The retaining ring 200 is mounted on the mounting wall 400, so that the explosion-proof sheet 300 closes the explosion hole 500.

In the method for mounting an explosion-proof sheet, the explosion-proof sheet 300 and the retaining ring 200 are first connected together, and then the retaining ring 200 is mounted in the explosion hole 500 of the mounting wall 400 of the battery housing 100. In addition, the mounting wall 400 is offset from the top opening of the battery housing 100, and does not need to be mounted on the top cover, so that the welding process on the top cover is simplified, the impact of welding of the lower plastic member on the performance of the explosion-proof sheet 300 is reduced, and the problem in case that the explosion-proof sheet 300 is mounted on the top cover is solved.

As such, in cases where the battery housing 100 is mounted and used on a new energy vehicle or other machinery, when the explosion-proof sheet 300 breaks due to the pressure in the battery housing 100 exceeding a set value, abnormal gas released from the battery housing 100 will not directly cause damage to the new energy vehicle or other machinery. The explosion hole 500 will not be blocked due to the close connection between the top cover and the new energy vehicle or other machinery. The space utilization rate of the top cover can also be increased.

As such, when the pressure in the battery housing 100 exceeds the set value, the explosion-proof sheet 300 breaks, and abnormal gas released from the battery housing 100 is directly discharged from the new energy vehicle or other machinery without causing damage to the new energy vehicle or other machinery, thereby improving the safety of the battery housing 100 during use.

In an embodiment, in the step 2), after the retaining ring 200 is mounted on the mounting wall 400, the explosion-proof sheet 300 is exposed to outside of the mounting wall 400.

As such, when the pressure in the battery housing 100 exceeds the set value, the explosion-proof sheet 300 breaks, abnormal gas released from the battery housing 100 is directly discharged, and the explosion hole 500 is not blocked.

In an embodiment, in the step 1), the explosion-proof sheet 300 is fixed to the retaining ring 200 by welding; and in the step 2), the retaining ring 200 is fixed to the mounting wall 400 by welding.

The explosion-proof sheet 300 and the retaining ring 200 are welded to form an integral structure. The integral structure is welded to the battery housing 100 through the mounting wall 400. As such, the welding process on the top cover is simplified, and the impact of welding of the lower plastic member on the performance of the explosion-proof sheet 300 is reduced.

In an embodiment, the retaining ring 200 includes an annular inner side portion 201 located on an inner side of the mounting wall 400, the inner side portion 201 is recessed outward to form a mounting step having an opening facing outward, and the mounting step is arranged surrounding the enclosed area; a mounting ring 301 is provided on an outer periphery of the explosion-proof sheet 300; and in the step 1), the mounting ring 301 is mounted on the mounting step.

The retaining ring 200 can provide a supporting position for the explosion-proof sheet 300 through the mounting step. Through the arrangement of the mounting step, the mounting ring 301 will not be deformed during welding of the explosion-proof sheet 300, so that the safety during welding of the explosion-proof sheet 300 is improved.

In an embodiment, a bottom of the mounting step has a flat surface, and an outer periphery of the mounting step has an outer peripheral surface; and in the step 1), after the mounting ring 301 is placed on the mounting step, the mounting ring 301 abuts against the flat surface, and the outer periphery of the mounting ring 301 abuts against the outer peripheral surface.

The mounting step provides a supporting position for the mounting ring 301 through the flat surface, and the connection between the retaining ring 200 and the explosion-proof sheet 300 is improved by welding the outer peripheral surface to the outer periphery of the mounting ring 301.

In an embodiment, an outer side of the retaining ring 200 includes an annular outer side portion 202, and an outer peripheral side wall of the outer side portion 202, an inner side wall of the outer side portion 202, and an inner side wall of the explosion hole 500 are respectively arranged longitudinally; and in the step 2), the outer side portion 202 is inserted into the explosion hole 500, and an outer periphery of the outer side portion 202 abuts against the inner side wall of the explosion hole 500.

In an embodiment, an outer side of the retaining ring 200 includes an annular outer side portion 202, and an outer peripheral side wall of the outer side portion 202 and an inner side wall of the explosion hole 500 are respectively arranged longitudinally; an inner side wall of the outer side portion 202 is inclined toward the enclosed area in an extending direction from the inner side portion 201 to the outer side portion 202; and
in the step 2), the outer side portion 202 is inserted into the explosion hole 500, and an outer periphery of the outer side portion 202 abuts against the inner side wall of the explosion hole 500.

In an embodiment, an outer side of the retaining ring 200 includes an annular outer side portion 202, and an outer peripheral side wall of the outer side portion 202, an inner side wall of the outer side portion 202, and an inner side wall of the explosion hole 500 are respectively inclined toward the enclosed area in an extending direction from the inner side portion 201 to the outer side portion 202; and
in the step 2), the outer side portion 202 is inserted into the explosion hole 500, and an outer periphery of the outer side portion 202 abuts against the inner side wall of the explosion hole 500.

In an embodiment, the explosion-proof sheet 300 includes an explosion layer 302 in a middle portion thereof, and the mounting ring 301 is arranged surrounding and abutting against an outer periphery of the explosion layer 302. The explosion layer 302 includes an inwardly curved piece 303 in an arc shape and a movable piece 304, an outer periphery of the inwardly curved piece 303 abuts against an inner side of the mounting ring 301, and a middle portion of the inwardly curved piece 303 is curved and convex toward the accommodating cavity. The inwardly curved piece 303 has an outer arc surface facing away from the accommodating cavity, and a plurality of elastic columns 305 are arranged protruding from the outer arc surface.

The mounting ring 301 includes an outer side wall arranged facing away from the mounting wall 400, an elastic rubber ring 306 is arranged protruding from the outer side wall of the mounting ring 301, a bottom of the rubber ring 306 is fixedly connected to the outer side wall of the mounting ring 301, and a movement area 307 is defined by the rubber ring 306. A plurality of gas holes 308 are provided in a middle portion of the rubber ring 306, and the plurality of gas holes 308 are arranged at intervals in a circumferential direction of the rubber ring 306. The movable piece 304 is embedded in a lower portion of the movement area 307, an outer periphery of the movable piece 304 is fixed to an inner side wall of the rubber ring 306 by an interference fit, and a top of the rubber ring 306 extends toward the movement area 307 to form a limiting ring 309 to prevent the movable piece 304 from moving upward out of the movement area 307.

When pressure in the accommodating cavity is less than a set value, a top of each of the elastic columns 305 abuts against a bottom of the movable piece 304, and the elastic columns 305 are in a natural state. When the pressure of the accommodating cavity exceeds the set value, the pressure in the accommodating cavity drives the inwardly curved piece 303 to bend and deform outward, the elastic columns 305 are moved upward and compressed, the elastic columns 305 drive the movable piece 304 to move to the upper portion of the movement area 307. When the inwardly curved piece 303 breaks, the plurality of gas holes 308 enter into communication with the accommodating cavity, and gas in the accommodating cavity passes through the broken explosion-proof sheet 300 and is released to outside of the accommodating cavity through the plurality of gas holes 308.

The value of the pressure in the battery housing 100 is adjusted through the cooperation of the elastic columns 305 and the movable piece 304 with the inwardly curved piece 303. When the pressure in the battery housing 100 exceeds the set value, the inwardly curved piece 303 breaks, and abnormal gas inside the battery housing 100 is dispersed through the plurality of gas holes 308 in the rubber ring 306, not directly centrally released. As such, the safety of releasing abnormal gas inside the battery housing 100 when the explosion-proof sheet 300 breaks is improved.

In an embodiment, each of the elastic columns 305 is provided with a hollow hole vertically running therethrough, a pressing column 3051 is arranged in the hollow hole, a top of the pressing column 3051 is arranged flush with the top of the elastic column 305, and a bottom of the pressing column 3051 is located above a bottom of the elastic column 305. A lower portion of the elastic column 305 includes a lower segment 3052, the lower segment 3052 is located below the pressing column 3051, the hollow hole includes a hollow segment located inside the lower segment 3052, and the hollow segment is located below the pressing column 3051.

A plurality of holes 3054 are provided in the lower segment 3052, and the hollow segment is in communication with outside through the holes 3054. The plurality of holes 3054 are arranged extending in an axial direction of the lower segment 3052, and the plurality of hollow holes 3054 are arranged at intervals in a circumferential direction of the lower segment 3052. The bottom of the pressing column 3051 extends downward to form a tapered head 3053, and a gap exists between the tapered head 3053 and the inwardly curved piece 303.

When the pressure in the accommodating cavity exceeds the set value, the pressure in the accommodating cavity drives the inwardly curved piece 303 to bend and deform outward, the elastic columns 305 are moved upward, the lower segments 3052 are compressed, and the tapered heads 3053 are pressed against the inwardly curved piece 303 and puncture the inwardly curved piece 303.

Because the tapered heads 3053 of the pressing columns 3051 in the elastic columns 305 puncture the inwardly curved piece 303, abnormal gas released from the battery housing 100 is dispersed through the holes formed in the inwardly curved piece 303 by puncture with the tapered heads 3053, and the dispersed abnormal gas is further dispersed through the plurality of gas holes 308 in the rubber ring 306. As such, the safety of releasing abnormal gas inside the battery housing 100 is improved, and abnormal gas inside the battery housing 100 will not burst out to cause damage outside of the battery housing 100.

The foregoing descriptions are merely preferred embodiments of the present disclosure, but are not intended to limit the present disclosure. Any modification, equivalent replacement, or improvement made within the protection scope and principle of the present disclosure shall fall within the protection scope of the present disclosure.

## Claims

1. A method for mounting an explosion-proof sheet, comprising:
step 1): providing an explosion-proof sheet and a retaining ring, wherein an enclosed area is defined by the retaining ring; connecting the explosion-proof sheet to the retaining ring, so that the explosion-proof sheet closes the enclosed area; and
step 2): providing a battery housing, wherein an accommodating cavity for accommodating battery cells is provided in the battery housing, a top opening for mounting a top cover is formed at a top of the battery housing, the battery housing comprises a mounting wall arranged offset from the top opening, and the mounting wall is provided with an explosion hole in communication with the accommodating cavity; mounting the retaining ring on the mounting wall, so that the explosion-proof sheet closes the explosion hole,
wherein in the step 2), after the retaining ring is mounted on the mounting wall, the explosion-proof sheet is exposed to outside of the mounting wall;
wherein in the step 1), the explosion-proof sheet is fixed to the retaining ring by welding, and in the step 2), the retaining ring is fixed to the mounting wall by welding;
wherein the retaining ring comprises an annular inner side portion located on an inner side of the mounting wall, the inner side portion is recessed outward to form a mounting step having an opening facing outward, the mounting step is arranged surrounding the enclosed area, a mounting ring is provided on an outer periphery of the explosion-proof sheet, and in the step 1), the mounting ring is mounted on the mounting step;
wherein a bottom of the mounting step has a flat surface, an outer periphery of the mounting step has an outer peripheral surface, and in the step 1), after the mounting ring is placed on the mounting step, the mounting ring abuts against the flat surface, and an outer periphery of the mounting ring abuts against the outer peripheral surface;
wherein an outer side of the retaining ring comprises an annular outer side portion, an outer peripheral side wall of the outer side portion, an inner side wall of the outer side portion, and an inner side wall of the explosion hole are respectively arranged longitudinally, and in the step 2), the outer side portion is inserted into the explosion hole, and an outer periphery of the outer side portion abuts against the inner side wall of the explosion hole; or an outer side of the retaining ring comprises an annular outer side portion, an outer peripheral side wall of the outer side portion and an inner side wall of the explosion hole are respectively arranged longitudinally, an inner side wall of the outer side portion is inclined toward the enclosed area in an extending direction from the inner side portion to the outer side portion, and in the step 2), the outer side portion is inserted into the explosion hole, and an outer periphery of the outer side portion abuts against the inner side wall of the explosion hole; or an outer side of the retaining ring comprises an annular outer side portion, an outer peripheral side wall of the outer side portion, an inner side wall of the outer side portion, and an inner side wall of the explosion hole are respectively inclined toward the enclosed area in an extending direction from the inner side portion to the outer side portion, and in the step 2), the outer side portion is inserted into the explosion hole, and an outer periphery of the outer side portion abuts against the inner side wall of the explosion hole;
wherein the explosion-proof sheet comprises an explosion layer in a middle portion thereof, the mounting ring is arranged surrounding and abutting against an outer periphery of the explosion layer, the explosion layer comprises an inwardly curved piece in an arc shape and a movable piece, an outer periphery of the inwardly curved piece abuts against an inner side of the mounting ring, a middle portion of the inwardly curved piece is curved and convex toward the accommodating cavity, the inwardly curved piece has an outer arc surface facing away from the accommodating cavity, a plurality of elastic columns are arranged protruding from the outer arc surface,
the mounting ring comprises an outer side wall arranged facing away from the mounting wall, an elastic rubber ring is arranged protruding from the outer side wall of the mounting ring, a bottom of the rubber ring is fixedly connected to the outer side wall of the mounting ring, a movement area is defined by the rubber ring, a plurality of gas holes are provided in a middle portion of the rubber ring, the plurality of gas holes are arranged at intervals in a circumferential direction of the rubber ring, the movable piece is embedded in a lower portion of the movement area, an outer periphery of the movable piece is fixed to an inner side wall of the rubber ring by an interference fit, and a top of the rubber ring extends toward the movement area to form a limiting ring to prevent the movable piece from moving upward out of the movement area; and
wherein when pressure in the accommodating cavity is less than a set value, a top of each of the elastic columns abuts against a bottom of the movable piece, and the elastic columns are in a natural state; and when the pressure of the accommodating cavity exceeds the set value, the pressure in the accommodating cavity drives the inwardly curved piece to bend and deform outward, the elastic columns are moved upward and compressed, the elastic columns drive the movable piece to move to an upper portion of the movement area, and when the inwardly curved piece breaks, the plurality of gas holes enter into communication with the accommodating cavity, and gas in the accommodating cavity passes through the broken explosion-proof sheet and is released to outside of the accommodating cavity through the plurality of gas holes.

2. The method for mounting an explosion-proof sheet according to claim 1, wherein each of the elastic columns is provided with a hollow hole vertically running therethrough, a pressing column is arranged in the hollow hole, a top of the pressing column is arranged flush with the top of the respective elastic column, and a bottom of the pressing column is located above a bottom of the respective elastic column; a lower portion of each of the elastic columns comprises a lower segment, the lower segment is located below the respective pressing column, the hollow hole comprises a hollow segment located inside the lower segment, and the hollow segment is located below the pressing column;
a plurality of holes are provided in the lower segment, and the hollow segment is in communication with outside through the holes; the plurality of holes are arranged extending in an axial direction of the lower segment, and the plurality of hollow holes are arranged at intervals in a circumferential direction of the lower segment; the bottom of the pressing column extends downward to form a tapered head, and a gap exists between the tapered head and the inwardly curved piece; and
when the pressure in the accommodating cavity exceeds the set value, the pressure in the accommodating cavity drives the inwardly curved piece to bend and deform outward, the elastic columns are moved upward, the lower segments are compressed, and the tapered heads are pressed against the inwardly curved piece and puncture the inwardly curved piece.
